# EUROPÄISCHE PATENTSCHRIFT

(11) **EP 0 505 881 B1**
(45) Veröffentlichungstag und Bekanntmachung des Hinweises auf die Patenterteilung: **09.03.1994**
(21) Anmeldenummer: 92104519.1
(22) Anmeldetag: 16.03.1992
(51) Int. Cl.: B01J 23/92, B01J 38/00

(54) **Verfahren und Einrichtung zur Regeneration verbrauchter DeNOx-Katalysatoren**
Process and apparatus for the regeneration of spent De-NOx catalysts
Procédé et dispositif de régénération des catalyseurs De-NOx épuisés

(30) Priorität: 28.03.1991 DE 4110337
(43) Veröffentlichungstag der Anmeldung: 30.09.1992
(73) Patentinhaber: SIEMENS AKTIENGESELLSCHAFT, 80333 München (DE)
(72) Erfinder: Hums, Erich, Dr., W-8600 Bamberg (DE)

(56) Entgegenhaltungen:
- EP-A- 0 353 467
- DE-A- 3 311 521
- FR-A- 2 241 516

## Beschreibung

Die Erfindung bezieht sich auf ein Verfahren und eine Vorrichtung zur Regeneration eines verbrauchten DeNOₓ-Katalysators.

Bei jeglicher Verbrennung mit Luftsauerstoff entstehen temperaturbedingt mehr oder weniger Stickoxide. Zur Verringerung der Stickoxide in den Rauchgasen von Verbrennungsanlagen ist es bekannt, die Stickoxide in Gegenwart eines Reduktionsmittels, wie etwa Ammoniak oder Harnstoff, an katalytisch aktiven Oberflächen zu Stickstoff und Wasserdampf zu reduzieren. Zu diesem Zweck werden Oxide eines oder mehrerer der Metalle Titan, Vanadium, Molybdän, Wolfram verwendet. Die Katalysatoren kommen in Form von Wabenkörpern oder mit katalytisch aktiver Masse beschichteten Platten oder Flechtwerken zum Einsatz.

Es hat sich nun gezeigt, daß die katalytische Aktivität solcher Katalysatoren im Laufe der Zeit mehr oder weniger deutlich nachläßt. Dieses Nachlassen der katalytischen Aktivität, welches im wesentlichen durch vielerlei im Rauchgas mitgeführter Katalysatorgifte und Verunreinigungen bedingt ist, macht schließlich das Auswechseln der Katalysatoren unausweichlich. Das Auswechseln der Katalysatoren erzeugt aber erhebliche Kosten und zu entsorgende Schadstoffe. Darüber hinaus erfordert es ein längeres Abschalten des Kraftwerks, was weitere Kosten verursacht.

Der Erfindung liegt daher die Aufgabe zugrunde, einen Weg zu weisen, wie mehr oder weniger stark verbrauchte DeNOₓ-Katalysatoren in situ regeneriert werden können.

Bezüglich des Verfahrens wird diese Aufgabe erfindungsgemäß dadurch gelöst, daß zur Regeneration eines verbrauchten DeNOₓ-Katalysators eine Molybdän-Sauerstoffverbindung bzw. deren Vorläuferverbindung auf den verbrauchten DeNOₓ-Katalysator niedergeschlagen werden. Durch diese Maßnahme läßt sich die Aktivität des bereits weitgehend verbrauchten DeNOₓ-Katalysators wieder deutlich anheben.

Dieses Verfahren läßt sich bereits in der Verbrennungsanlage bzw. im Kraftwerk mit einer erfindungsgemäßen Einrichtung durchführen, bei der ein Rauchgaskanal eine Eindüsvorrichtung für molybdänoxidhaltigen Staub umfaßt, die in Strömungsrichtung des Rauchgases zwischen der Brennzone einer Brennkammer und den im Rauchgaskanal befindlichen Oberflächen des verbrauchten DeNOₓ-Katalysators eingebaut ist. Mit einer solchen Einrichtung läßt sich die katalytische Aktivität des nachgeschalteten DeNOₓ-Katalysators immer wieder auffrischen, ohne daß die DeNOₓ-Katalysatoren ausgebaut und dazu die Verbrennungsanlage oder das Kraftwerk abgestellt werden müssen.

Dieses Verfahren läßt sich alternativ auch in einer anderen erfindungsgemäßen Einrichtung durchführen, bei der eine molybdänoxidhaltige Oberfläche im Rauchgaskanal in Strömungsrichtung des Rauchgases zwischen der Brennzone einer Brennkammer und den im Rauchgaskanal befindlichen Oberflächen des verbrauchten DeNOₓ-Katalysators angeordnet ist. Hierdurch wird erreicht, daß mit dem Rauchgas kontinuierlich geringe Mengen molybdänoxidhaltiger Sauerstoffverbindungen auf den nachgeschalteten DeNOₓ-Katalysator übertragen werden und dort einem allzu starken Absinken der katalytischen Aktivität entgegenwirken. Auch diese Einrichtung entfaltet ihre Wirksamkeit während des normalen Kraftwerksbetriebes. Auch mit ihr kann ein Stillsetzen des Kraftwerks zum Zwecke des Ausbaus und der Regeneration der DeNOₓ-Katalysatoren vermieden werden.

Eine besonders vorteilhafte Ausgestaltung der Erfindung wird erreicht, wenn das Molybdänoxid im Rauchgaskanal in Strömungsrichtung des Rauchgases vor den katalytisch aktiven Oberflächen deponiert wird und von der Rauchgasfeuchte bei 100 °C bis 500 °C, vorzugsweise etwa 350 °C, mitgeführt und auf den Oberflächen des verbrauchten DeNOₓ-Katalysators niedergeschlagen wird. Diese Maßnahme führt zu einem kontinuierlichen Übertragen von Molybdän-Sauerstoffverbindungen auf die nachgeschalteten katalytischen Oberflächen und führt zu einer ständigen Stabilisierung der katalytischen Aktivität dieses Katalysators.

Der Übertrag des im Rauchgaskanal deponierten Molybdänoxids auf die Oberflächen des DeNOₓ-Katalysators läßt sich einstellen, wenn in besonders zweckmäßiger Ausgestaltung der Erfindung, je nach Bedarf, Wasserdampf im Rauchgaskanal in Strömungsrichtung des Rauchgases vor den Oberflächen des verbrauchten DeNOₓ-Katalysators und des deponierten Molybdänoxids in das Rauchgas eingedüst wird. Diese Maßnahme wird möglich, weil sich gezeigt hat, daß das Molybdänoxid in Gegenwart von Wasserdampf verstärkt transportiert wird.

Weitere vorteilhafte Ausgestaltungen der Erfindung sind den übrigen Unteransprüchen zu entnehmen.

Ausführungsbeispiele der Erfindung werden anhand von zwei Figuren näher erläutert. Es zeigen:
- FIG 1: eine Vorrichtung, bei der Molybdän-Sauerstoffverbindungen in den Rauchgaskanal in Strömungsrichtung des Rauchgases vor den katalytisch aktiven Oberflächen eingedüst werden; und
- FIG 2: eine Vorrichtung, bei der im Rauchgaskanal in Strömungsrichtung des Rauchgases vor der katalytisch aktiven Oberflächen Molybdän-Sauerstoffverbindungen deponiert sind.

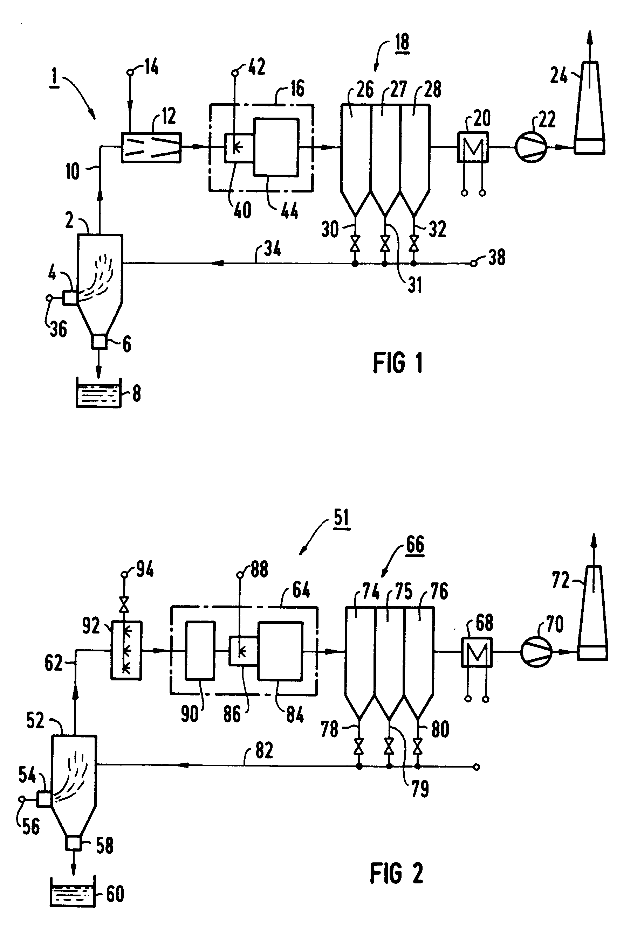

Die Figur 1 zeigt in schematischer Darstellung ein fossil befeuertes Kraftwerk 1. In der Darstellung erkennt man eine Verbrennungsanlage 2, im vorliegenden Fall einen Dampferzeuger, mit einem Brenner 4, einem Schlackenabzug 6 mit angeschlossenem Schlackenbad 8 und einer Rauchgasleitung 10. In der Rauchgasleitung 10 sind hintereinander eine Eindüsvorrichtung 12 für molybdänoxidhaltigen Staub 14, eine Entstickungsanlage 16, auch DeNOₓ-Anlage genannt, eine dreistufige Staubfilteranlage 18, ein Wärmetauscher 20, ein Saugzuggebläse 22 und ein Kamin 24 geschaltet. Jeder der drei Stufen 26, 27, 28 der Staubfilteranlage 18 ist über eine Staubabzugsleitung 30, 31, 32 und eine Staubrezirkulationsleitung 34 mit dem Dampferzeuger 2 verbunden.

Beim Betrieb dieser Verbrennungsanlage 2 wird ein fossiler Brennstoff 36 über die Brenner 4 in den Dampferzeuger 2 geblasen und dort in Gegenwart von Frischluft 38 verbrannt. Die dabei entstehenden Rauchgase werden über die Rauchgasleitung 10 von dem in der Rauchgasleitung 10 eingebauten Saugzuggebläse 22 abgezogen und nacheinander durch die Eindüsvorrichtung 12, die DeNOₓ-Anlage 16, die Staubfilteranlage 18 und den Wärmetauscher 20 gesogen und in den Kamin 24 befördert. Beim Eintritt in die DeNOₓ-Anlage 16 strömen die Rauchgase durch eine Eindüsvorrichtung 40 für Ammoniak 42 in die Katalysatoranordnung 44 ein. An den katalytisch aktiven Oberflächen der Katalysatoranordnung 44 werden die Stickoxide zusammen mit dem zuvor eingedüsten Ammoniak 42 zu Stickstoff und Wasserdampf reduziert. In der nachgeschalteten Staubfilteranlage 18 werden aus diesen Rauchgasen die mitgeführten Asche- und Staubpartikel herausgefiltert. Das so gereinigte Rauchgas wird in dem der Staubfilteranlage 18 nachgeschalteten Wärmetauscher 20 wieder auf etwa 130 °C aufgeheizt und dann vom Saugzuggebläse 22 in den Kamin 24 geblasen. Die in der Staubfilteranlage 18 zurückgehaltenen Staub- und Aschepartikel werden über die Staubabzugsleitungen 30, 31, 32 der drei Stufen 26, 27, 28 der Staubfilteranlage 18 in eine mit Frischluft und/oder Rauchgas beaufschlagte Staubrezirkulationsleitung 34 entladen und gelangen so wieder in den Dampferzeuger 2 zurück. Dort werden die Staubpartikel in der Hitze der Flamme aufgeschmolzen und zusammen mit der Schlacke über den Schlackeabzug 6 in das Schlackenbad 8 geleitet.

Dadurch werden die Staubpartikel unlöslich in der Schlacke eingebunden.

Wenn nun im Laufe der Betriebsdauer die katalytische Aktivität der Katalysatoranordnung 44 nachläßt, kann bei dieser Verbrennungsanlage 2 über die Eindüsvorrichtung 12 für molybdänoxidhaltigen Staub 14 solcher Staub in das Rauchgas eingetragen werden. Er wird dann von den Rauchgasen mitgerissen und lagert sich auf den katalytisch aktiven Oberflächen der Katalysatoranordnung 44 ab. Dabei steigt die katalytische Aktivität der Katalysatoranordnung 44 an, wodurch sich ihre Standzeit vervielfachen läßt. Dies verringert nicht nur den Aufwand für die Wartung der DeNOₓ-Anlagen beträchtlich, sondern verringert auch der mit dem Auswechseln verbrauchter DeNOₓ-Katalysatoren verbundenen Anfall von zu entsorgenden Schadstoffen. Diese Verringerung der zu entsorgenden Schadstoffe ist proportional der Verlängerung der Standzeit der Katalysatoranordnung 44.

Die Figur 2 zeigt ein anderes Kraftwerk 51, das ganz ähnlich wie das in Figur 1 gezeigte Kraftwerk 1 aufgebaut ist. Auch hier ist eine Verbrennungsanlage 52 in Form eines Dampferzeugers mit einem Brenner 54 für fossile Brennstoffe 56, mit einem Schlackeabzug 58 und Schlackebad 60 gezeichnet und sind in der Rauchgasleitung 62 nacheinander eine DeNOₓ-Anlage 64, eine Staubfilteranlage 66, eine Wärmetauscheranlage 68, ein Saugzuggebläse 70 und ein Kamin 72 in Serie geschaltet. Die Staubfilteranlage 66 ist dreistufig ausgebildet. Jede der drei Stufen 74, 75, 76 ist mit einer Staubabzugsleitung 78, 79, 80 verbunden, die alle drei in eine in den Dampferzeuger 52 zurückführende Staubrezirkulationsleitung 82 münden. Die DeNOₓ-Anlage 64 enthält eine der Katalysatoranordnung 84 vorgeschaltete Eindüsvorrichtung 86 für Ammoniak 88. Außerdem ist, abweichend vom Ausführungsbeispiel der Figur 1, in der DeNOₓ-Anlage 64 in Strömungsrichtung vor der Eindüsvorrichtung 86 für Ammoniak eine Plattenanordnung 90 mit oberflächlich leicht desorbierbar aufgebrachten Molybdänoxid dem Rauchgas ausgesetzt. Zwischen der DeNOₓ-Anlage 64 und der Verbrennungsanlage 52 ist außerdem eine Eindüsvorrichtung 92 für Wasserdampf 94 vorgesehen.

Beim Betrieb dieses Kraftwerks 51 wird ein fossiler Brennstoff 56 über den Brenner 54 in den Dampferzeuger 52 geblasen und dort in Gegenwart von Frischluft verbrannt. Die dabei entstehenden Schlacken fallen bei den hohen Temperaturen in aufgeschmolzem Zustand an und werden über einen sogenannten Schlackeabzug 58 abgezogen und in ein Schlackebad 60 geleitet. dabei erhärtet die Schlacke zu glasartigen Partikeln. Die im Dampferzeuger 52 entstehenden Rauchgase werden über die Rauchgasleitung 62 von einem in der Rauchgasleitung eingebauten Saugzuggebläse 70 abgezogen und durch die Eindüsvorrichtung 92 für Wasserdampf 94, in die DeNOₓ-Anlage 64 und von der DeNOₓ-Anlage durch die Staubfilteranlage 66 und den Wärmetauscher 68 in den Kamin 72 befördert. Die in der Staubfilteranlage 66 abgezogenen Staub- und Schlackepartikel werden über die Staubabzugsleitungen 78, 79, 80 der einzelnen Stufen 74, 75, 76 der Staubfilteranlage 66 in die in den Dampferzeuger 52 zurückführende Staubrezirkulationsleitung befördert. Dort wird der Staub in der Hitze der Flamme aufgeschmolzen und mitsamt der Schlacke abgezogen. Auch hier ist eine Eindüsvorrichtung 86 für Ammoniak 88 der in der DeNOₓ-Anlage 64 befindlichen Katalysatoranordnung 84 vorgeschaltet. Dieser Eindüsvorrichtung 86 für Ammoniak 88 ist jedoch zusätzlich noch eine von Rauchgas durchströmte Plattenanordnung 90 mit oberflächlich leicht desorbierbar aufgebrachtem Molybdänoxid vorgeschaltet.

Durch die natürliche Rauchgasfeuchte, das heißt durch den bei der Verbrennung entstehenden Wasserdampf, werden fortlaufend geringe Mengen der auf den Platten leicht desorbierbar aufgebrachten Molybdänoxidpartikel mitgenommen und auf den nachgeschalteten Oberflächen der Katalysatoranordnung 84 deponiert. Dies vollzieht sich vorzugsweise bei einer Temperatur von etwa 350 °C. Durch diesen ständigen Niederschlag von Molybdänoxid auf den katalytisch aktiven Oberflächen der Katalysatoranordnung 84 kann die Desaktivierung derselben deutlich vermindert werden. Dieses führt automatisch zu längeren Standzeiten der Katalysatoranordnung 84. Darüber hinaus kann durch Erhöhung der Rauchgasfeuchte, das heißt durch zusätzliches Eindüsen von Wasserdampf mittels der Eindüsvorrichtung 92, die Desorbierungsgeschwindigkeit des in der Rauchgasleitung deponierten Molybdänoxids gesteigert werden. Dabei läßt sich durch richtige Einstellung der Rauchgasfeuchte, das heißt durch vorsichtiges, angepaßtes Zudosieren von Wasserdampf die katalytische Aktivität der nachgeschalteten Katalysatoranordnung über sehr lange Zeitintervalle konstant halten. Diese Zeitintervalle betragen ein Vielfaches der sonst zu erwartenden maximalen Standzeit der Katalysatoranordnung. Auch hierdurch wird es möglich, Stillstandzeiten des Kraftwerks zu verringern und die zu entsorgenden Massen pro erzeugter Heizleistung zu verringern.

Um das Molybdänoxid in einfacher Weise und in hinreichender Menge desorbieren zu können, ist es zweckmäßig, als molybdänhaltige Oberfläche inertes Material, z. B. calciniertes Titanoxid, zu verwenden, das mit Molybdänoxid und gegebenenfalls mit Vanadiumoxid beschichtet ist. Dieses inerte beschichtete Material kann darüber hinaus auch auf einer makroskopischen metallischen Tragstruktur aufgetragen sein. Hierbei ist es vorteilhaft, wenn das inerte beschichtete Material durch Eintauchen und anschließendes Trocknen oder durch Aufdampfen auf die makroskopische metallische Tragstruktur aufgebracht worden ist.

## Patentansprüche

1. Verfahren zur Regeneration eines verbrauchten DeNox-Katalysators, **dadurch gekennzeichnet,** daß eine Molybdän-Sauerstoffverbindung (14, 90) oder deren Vorläuferverbindung auf dem verbrauchten DeNOₓ-Katalysator (44, 84) niedergeschlagen wird.

2. Verfahren nach Anspruch 1, **dadurch gekennzeichnet,** daß Molybdäntrioxid MoO₃ (14, 90) auf den Oberflächen des verbrauchten DeNOₓ-Katalysators (44, 84) niedergeschlagen wird.

3. Verfahren nach Anspruch 1 oder 2, **dadurch gekennzeichnet,** daß molybdänoxidhaltiger Staub (14) auf den Oberflächen des verbrauchten DeNOₓ-Katalysators (44) niedergeschlagen wird.

4. Verfahren nach Anspruch 3, **dadurch gekennzeichnet,** daß molybdänoxidhaltiger Staub (14) in einen Rauchgaskanal (10) in Strömungsrichtung eines Rauchgases vor den Oberflächen eines in dem Rauchgaskanal (10) eingebauten und von dem Rauchgas durchströmten, verbrauchten DeNOₓ-Katalysator (44) eingedüst wird.

5. Verfahren nach Anspruch 1 oder 2, **dadurch gekennzeichnet,** daß Molybdänoxid (90) über die Dampfphase auf den Oberflächen des verbrauchten DeNOₓ-Katalysators (84) aufgebracht wird.

6. Verfahren nach einem der Ansprüche 1, 2 und 5, **dadurch gekennzeichnet,** daß Molybdänoxid (90) im Rauchgaskanal (62) in Strömungsrichtung des Rauchgases vor den katalytisch aktiven Oberflächen deponiert wird und von der Rauchgasfeuchte bei 100 bis 500 °C, vorzugsweise etwa 350 °C, desorbiert mitgeführt und auf den Oberflächen der verbrauchten DeNOx-Katalysatoren (84) niedergeschlagen wird.

7. Verfahren nach Anspruch 6, **dadurch gekennzeichnet,** daß je nach Bedarf Wasserdampf (94) im Rauchgaskanal (62) in Strömungsrichtung des Rauchgases vor den Oberflächen des verbrauchten DeNOₓ-Katalysators (84) und des deponierten Molybdänoxids (90) in das Rauchgas eingedüst wird.

8. Einrichtung zur Durchführung des Verfahrens nach einem der Ansprüche 1 bis 4, **dadurch gekennzeichnet,** daß ein Rauchgaskanal (10) eine Eindüsvorrichtung (12) für molybdänoxidhaltigen Staub (14) umfaßt, die in Strömungsrichtung des Rauchgases zwischen der Brennzone einer Brennkammer (2) und den im Rauchgaskanal (10) befindlichen Oberflächen des verbrauchten DeNOₓ-Katalysators (44) eingebaut ist.

9. Einrichtung zur Durchführung des Verfahrens nach einem der Ansprüche 1, 2, 5 bis 7, **dadurch gekennzeichnet,** daß eine molybdänoxidhaltige Oberfläche (90) im Rauchgaskanal (62) in Strömungsrichtung des Rauchgases zwischen der Brennzone einer Brennkammer (52) und den im Rauchgaskanal (62) befindlichen Oberflächen des verbrauchten DeNOₓ- Katalysators angeordnet (84) ist.

10. Einrichtung nach Anspruch 9, **dadurch gekennzeichnet,** daß als molybdänoxidhaltige Oberfläche Platten (90) mit oberflächlich leicht desorbierbar aufgebrachten Molybdänoxid verwendet sind.

11. Einrichtung nach Anspruch 9 oder 10, **dadurch gekennzeichnet,** daß in Strömungsrichtung des Rauchgases zwischen der molybdänoxidhaltigen Oberfläche (90) und der Brennzone in der Brennkammer (52) eine Eindüsvorrichtung (92) für den Wasserdampf in den Rauchgaskanal (62) eingebaut ist.

12. Einrichtung nach einem der Ansprüche 9 bis 11, **dadurch gekennzeichnet,** daß als molybdänoxidhaltige Oberfläche (90) mit Molybdänoxid und gegebenenfalls Vanadiumoxid beschichtetes inertes Material, wie zum Beispiel calciniertes Titanoxidpulver, verwendet ist.

13. Einrichtung nach Anspruch 12, **dadurch gekennzeichnet,** daß das mit Molybdänoxid und Vanadiumoxid beschichtete inerte Material auf einer makroskopischen metallischen Tragstruktur, wie zum Beispiel Streckmetall, verdichtete Metallspäne, Siebe, Lochbleche, aufgetragen ist.

14. Einrichtung nach Anspruch 13, **dadurch gekennzeichnet,** daß das molybdänoxidhaltige Material durch Tauchen und anschließendes Trocknen oder durch Aufdampfen auf die makroskopische metallische Tragstruktur aufgebracht ist.

15. Einrichtung nach einem der Ansprüche 1 bis 8, **dadurch gekennzeichnet,** daß eine Staubrezirkulationsleitung (34, 82) vorgesehen ist, die in Strömrichtung des Rauchgases hinter dem DeNOₓ-Katalysator vom Rauchgaskanal (10, 62) abzweigt und in den Rauchgaskanal (10, 62) in Strömungsrichtung des Rauchgases vor dem DeNOₓ-Katalysator einmündet.

## Claims

1. Method for the regeneration of a spent DeNox catalyst, characterized in that a molybdenum-oxygen compound (14, 90) or its precursor compound is deposited on the spent DeNOₓ catalyst (44, 84).

2. Method according to claim 1, characterized in that molybdenum trioxide MoO₃ (14, 90) is deposited on the surfaces of the spent DeNOₓ catalyst (44, 84).

3. Method according to claim 1 or 2, characterized in that powder (14) containing molybdenum oxide is deposited on the surfaces of the spent DeNOₓ catalyst (44).

4. Method according to claim 3, characterized in that powder (14) containing molybdenum oxide is nozzle-injected into a flue-gas conduit (10) into the flow of a flue gas upstream of the surfaces of a spent DeNOₓ catalyst (44) which is installed in the flue-gas conduit (10) and through which the flue gas flows.

5. Method according to claim 1 or 2, characterized in that molybdenum oxide (90) is applied in the vapour phase on to the surfaces of the spent DeNOₓ catalyst (84).

6. Method according to one of claims 1, 2 and 5, characterized in that molybdenum oxide (90) is deposited in the flue-gas conduit (62) into the flow of the flue gas upstream of the catalytically active surfaces and is carried along desorbed from the flue-gas moisture at 100 to 500°C, preferably about 350°C, and is deposited on the surfaces of the spent DeNOx catalysts (84).

7. Method according to claim 6, characterized in that in each case as required, water vapour (94) in the flue-gas conduit (62) is nozzle-injected into the flue gas into the flow of the flue gas upstream of the surfaces of the spent DeNOₓ catalyst (84) and the deposited molybdenum oxide (90) .

8. Device for carrying out the method according to one of claims 1 to 4, characterized in that a flue-gas conduit (10) comprises a nozzle-injection device (12) for powder (14) containing molybdenum oxide, which is positioned in the flow of the flue gas between the combustion zone of a combustion chamber (2) and the surfaces of the spent DeNOₓ catalyst (44) located in the flue-gas conduit (10).

9. Device for carrying out the method according to one of claims 1, 2, 5 to 7, characterized in that a surface (90) containing molybdenum oxide in the flue-gas conduit (62) is arranged in the flow of the flue gas between the combustion zone of a combustion chamber (52) and the surfaces of the spent DeNOₓ catalyst (84) located in the flue-gas conduit (62).

10. Device according to claim 9, characterized in that plates (90) with molybdenum oxide applied on the surface in an easily desorbable manner are used as surfaces containing molybdenum oxide.

11. Device according to claim 9 or 10, characterized in that in the flow of the flue gas between the surface (90) containing molybdenum oxide and the combustion zone in the combustion chamber (52) a nozzle-injection device (92) for the water vapour is positioned in the flue-gas conduit (62).

12. Device according to one of claims 9 to 11, characterized in that inert material coated with molybdenum oxide and possibly vanadium oxide, for example calcined titanium oxide powder, is used as surface (90) containing molybdenum oxide.

13. Device according to claim 12, characterized in that the inert material coated with molybdenum oxide and vanadium oxide is applied to a macroscopic metallic supporting structure, for example expanded metal, compacted metal chips, sieves, perforated plates.

14. Device according to claim 13, characterized in that the material containing molybdenum oxide is applied by way of dipping and subsequent drying or by way of vacuum evaporation on to the macroscopic metallic supporting structure.

15. Device according to one of claims 1 to 8, characterized in that a powder recirculation line (34, 82) is provided, which branches from the flue-gas conduit (10, 62) in the flow of the flue gas downstream of the DeNOₓ catalyst and opens into the flue-gas conduit (10, 62) in the flow of the flue gas upstream of the DeNOₓ catalyst.

## Revendications

1. Procédé de régénération d'un catalyseur DeNox usagé, caractérisé en ce qu'un composé de molybdène et d'oxygène (14, 90) ou le composé précurseur de celui-ci est précipité sur le catalyseur DeNox usagé (44, 84).

2. Procédé selon la revendication 1, caractérisé en ce que du trioxyde de molybdène MoO₃ (14, 90) est précipité sur les surfaces du catalyseur DeNox usagé (44, 84).

3. Procédé selon la revendication 1 ou 2, caractérisé en ce qu'une poussière (14) contenant de l'oxyde de molybdène est précipitée sur les surfaces du catalyseur DeNox (44).

4. Procédé selon la revendication 3, caractérisé en ce que la poussière (14) contenant de l'oxyde de molybdène est injectée dans un canal de gaz d'échappement (10) en amont des surfaces du catalyseur DeNox usagé (44) monté dans le canal des gaz d'échappement (10) et traversé par les gaz d'échappement.

5. Procédé selon la revendication 1 ou 2, caractérisé en ce que l'oxyde de molybdène (90) est appliqué en phase vapeur sur les surfaces du catalyseur DeNox usagé (84).

6. Procédé selon l'une des revendications 1, 2 et 5, caractérisé en ce que l'oxyde de molybdène (90) est déposé dans le canal des gaz d'échappement (62) en amont de la surface catalytiquement active et est entraîné, désorbé par l'humidité des gaz d'échappement entre 100 et 500°C et, de préférence, à environ 350°C et est précipité sur les surfaces du catalyseur DeNox usagé (84).

7. Procédé selon la revendication 6, caractérisé en ce que, suivant les besoins, de la vapeur d'eau (94) est injectée dans le canal des gaz d'échappement (62) en amont des surfaces du catalyseur DeNox usagé (84) et l'oxyde de molybdène (90) déposé dans les gaz d'échappement.

8. Dispositif pour mettre en oeuvre le procédé selon l'une des revendications 1 à 4, caractérisé en ce qu'un canal des gaz d'échappement (10) comprend un dispositif d'injection (12) pour poussières contenant de l'oxyde de molybdène (14) qui est monté, entre la zone de combustion d'une chambre de combustion (2) et les surfaces du catalyseur DeNox usagé (44) se trouvant dans le canal des gaz d'échappement.

9. Dispositif pour mettre en oeuvre le procédé selon l'une des revendications 1, 2, 5 à 7, caractérisé en ce qu'une surface contenant de l'oxyde de molybdène (90) dans le canal des gaz d'échappement (62) est disposée, entre la zone de combustion d'une chambre de combustion (52) et les surfaces du catalyseur DeNox usagé (84) se trouvant dans le canal des gaz d'échappement (62).

10. Dispositif selon la revendication 9, caractérisé en ce que l'on utilise comme surface contenant l'oxyde de molybdène (90) des plaques sur la surface desquelles est déposé de l'oxyde de molybdène facilement désorbable.

11. Dispositif selon la revendication 9 ou 10, caractérisé en ce que, entre la surface contenant de l'oxyde de molybdène (90) et la zone de combustion dans la chambre de combustion (52), un dispositif d'injection (92) pour la vapeur d'eau est monté dans la canal des gaz d'échappement (62).

12. Dispositif selon la revendication 9 ou 11, caractérisé en ce que l'on utilise comme surface contenant de l'oxyde de molybdène (90) un matériau inerte comme, par exemple, de la poudre d'oxyde de titane calcinée revêtu d'oxyde de molybdène et, éventuellement, d'oxyde de vanadium.

13. Dispositif selon la revendication 12, caractérisé en ce que le matériau inerte revêtu d'oxyde de molybdène et d'oxyde de vanadium est appliqué sur une structure portante métallique macroscopique comme, par exemple, métal déployé, copeaux métalliques compactés, tamis, tôles perforées.

14. Dispositif selon la revendication 13, caractérisé en ce que le matériau contenant de l'oxyde de molybdène est appliqué sur la structure portante métallique macroscopique par immersion et séchage ultérieur ou par dépôt en phase vapeur.

15. Dispositif selon l'une des revendications 1 à 8, caractérisé en ce qu'il est prévu une conduite de recirculation de poussière (34, 82) qui est branchée du canal des gaz d'échappement (10, 62) en aval du catalyseur DeNox et qui débouche dans le canal des gaz d'échappement (10, 62) en amont du le catalyseur DeNox.
